# NEW EUROPEAN PATENT SPECIFICATION

(11) **EP 1 904 349 B2**
(45) Date of publication and mention of the opposition decision: **18.04.2018**
(45) Mention of the grant of the patent: 18.03.2015
(21) Application number: 06787830.6
(22) Date of filing: 19.07.2006
(51) Int. Cl.: B60S 1/38

(54) **WIPER BLADE ASSEMBLY AND METHOD OF FORMING THE SAME**
WISCHBLATTANORDNUNG UND HERSTELLUNGSVERFAHREN DAFÜR
BALAIS D'ESSUIE GLACE ET SON PROCEDE DE FORMATION

(30) Priority: 19.07.2005 US 184443
(43) Date of publication of application: 02.04.2008
(73) Proprietor: Valeo North America, Inc., Troy, MI 48083 (US)
(72) Inventor: KOKIC, Steve, Auburn Hills, MI 48326 (US); COOKE, Walter, W., Windsor, ON N8X 4J6 (CA); DREHER, Thomas, F-78220 Viroflay XX (FR); JALLET, Sebastien, Auburn Hills, MI 48326 (US); HARRIS, Daryl, G., F-78310 Maurepas XX (FR)
(74) Representative: Callu Danseux, Violaine
(86) International application number: PCT/US2006/027996
(87) International publication number: WO 2007/011996

(56) References cited:
- EP-A2- 0 316 114
- EP-A2- 1 232 922
- WO-A-02/04265
- WO-A-2006/088808
- DE-A1- 2 336 271
- DE-A1- 10 025 630
- DE-U1- 29 903 123
- DE-U1-202004 013 172
- DE-U1-202004 013 172
- JP-A- 2003 054 382
- JP-A- 2003 054 382
- JP-U- S6 219 467
- JP-U- S6 219 467
- US-A- 3 317 945

## Description

### BACKGROUND

The present disclosure relates generally to wiper blade assemblies, and more particularly to wiper blade assemblies having airfoils.

At high vehicle speeds, wiper blades may be subjected to aerodynamic lift forces that tend to lift the blades off the windshield, which may reduce the effectiveness of the blade. In efforts to increase blade efficiency, wiper arm designs generally employ springs to create downward pressure on the wiper blades. Some other systems include wiper blade designs which provide additional aerodynamic downward forces from the wiper blade interacting with the air stream. Although these wiper blade designs may be desirable in some instances, there may be some wiper systems in which these additional aerodynamic downward forces are not desirable.

Some efforts to increase blade effectiveness may include the addition of airfoils on the wiper blades. Generally, airfoils aid in controlling airflow over the wiper blade as an air stream flows over the body of the vehicle. Airfoils may, in some instances, generate a downward aerodynamic force, which pushes the wiper blade into contact with the windshield.

Many airfoils have curved sections that are attached to the top of the wiper blade or to the wiper arm, with a concave asymmetrical surface facing the oncoming air stream. While these airfoils have been effective in increasing the downward aerodynamic force on the wiper blade, there is the possibility that they may create increasing drag as wind velocity increases. In some instances, this type of airfoil may be associated with an increased amount of "pullback." "Pullback" is generally defined as the rewetting of the wiped surface on the trailing side of the wiper blade as the wiper blade reverses direction. The rewetted area may cause undesirable temporary optical distortion through the windshield.

As such, it would be desirable to provide a wiper blade assembly that substantially eliminates blade lift during normal vehicle operation, while reducing the amount of pullback experienced with some current designs.

A wiper blade assembly according to the preamble of claim 1 is know from document JP 2003 054382 A.

### SUMMARY

The present disclosure provides a wiper blade assembly. The wiper blade assembly includes a wiper blade member having a length and an airfoil member operatively connected to the wiper blade member. The airfoil member extends longitudinally along at least a portion of the wiper blade member length. The airfoil member also has a cross-sectional profile that is symmetrical about a plane of symmetry extending through a center of the airfoil member and longitudinally through the airfoil member.

### BRIEF DESCRIPTION OF THE DRAWINGS

Features and advantages of the present disclosure will become apparent by reference to the following detailed description and drawings, in which like reference numerals correspond to similar, though not necessarily identical components. For the sake of brevity, reference numerals or features having a previously described function may not necessarily be described in connection with other drawings in which they appear.
Fig. 1 is a perspective view of an embodiment of a wiper blade assembly;
Fig. 2 is an enlarged cross-sectional view taken along line 2-2 of Fig. 1, depicting the wiper blade assembly engaged with two wiper blade splines;
Fig. 3 is a semi-schematic cross-sectional view of an alternate embodiment of the wiper blade assembly engaged with a wiper blade spline, not falling within the scope of the appended claims;
Fig. 4 is a semi-schematic cross-sectional view of an embodiment of the wiper blade assembly having a bell curve shaped cross-sectional profile;
Fig. 5 is a semi-schematic cross-sectional view of an alternate embodiment of a wiper blade assembly having a cardioid shaped cross- sectional profile, not falling within the scope of the appended claims;
Fig. 6 is a semi-schematic view of a windshield, a wipe pattern, and two pullback paths;
Figs. 7A, 7B and 7D are semi-schematic cross-sectional views depicting alternate embodiments of a wiper blade assembly, not falling within the scope of the appended claims. Figs. 7C is a semi-schematic cross-sectional view depicting alternate embodiments of a wiper blade assembly; and
Fig. 8 is a semi-schematic perspective view of an embodiment of the wiper blade assembly engaging two wiper blade splines and a clip.

### DETAILED DESCRIPTION OF THE EMBODIMENTS

Embodiment(s) of the wiper blade assembly disclosed herein include airfoils having symmetrical profile designs that may advantageously assist in reducing pullback and aerodynamic blade lift. Without being bound to any theory, it is believed that embodiment(s) of the wiper blade assembly may reduce aerodynamic lift and pullback at various vehicle speeds, including high vehicle speeds (e.g. 70 mph/113 kph). It is to be understood that the embodiment(s) of the wiper blade assembly may be used in any applications involving directional airflow. In a non-limitative example, the wiper blade assembly is used in conjunction with a vehicle windshield wiper system. Other non-limitative examples of systems in which the wiper blade assembly may be used include head lamp wiper systems, vehicle rear window wiper systems, train wiper systems, aircraft wiper systems, water vehicle wiper systems, and/or the like.

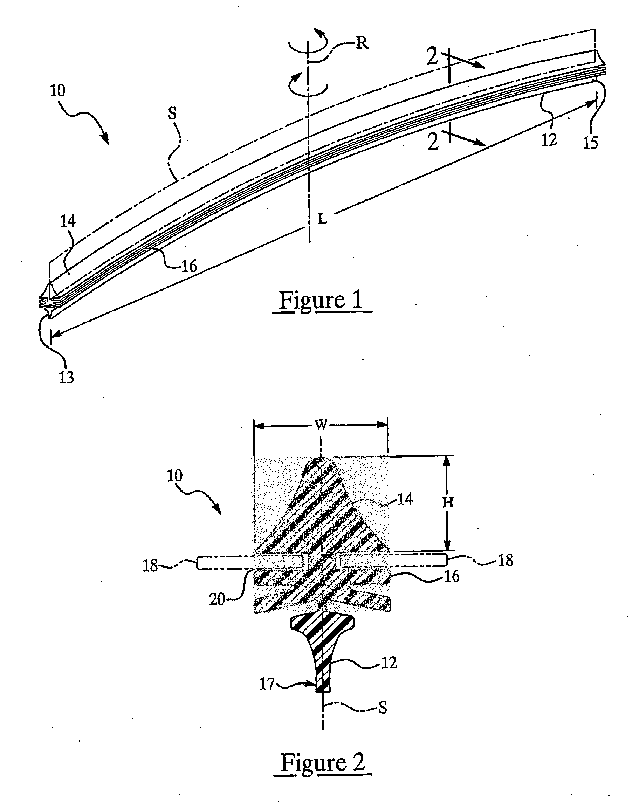

Referring now to Fig. 1, an embodiment of a wiper blade assembly 10 is depicted. The wiper blade assembly 10 generally includes a wiper blade member 12 and an airfoil member 14 operatively connected to the wiper blade member 12. Suitable materials for both the wiper blade member 12 and the airfoil member 14 include, but are not limited to polymeric materials (non-limitative examples of which include plastic materials, elastomeric materials (natural and/or synthetic), silicone materials, and/or the like, and/or combinations thereof). It is to be understood that the airfoil member 14 may be a composite of two or more materials. It is to be further understood that the wiper blade member 12 may be a composite having, for example, a polymeric material supported by or commingled with carbon fiber(s). In a non-limitative example of the wiper blade assembly 10, the wiper blade member 12 is made of natural rubber and the airfoil member 14 is made of ethylene propylene diene monomer (EPDM). In another non-limitative example of the wiper blade assembly 10, the wiper blade member 12 is made of polypropylene and the airfoil member 14 is a thermoplastic elastomer (TPE) (a non-limitative example of which includes SANTOPRENE, which is commercially available from Advanced Elastomer Systems, LP, an ExxonMobil Chemical Affiliate, located in Akron, OH).

In an embodiment, the wiper blade member 12 has a length L, and the airfoil member 14 extends longitudinally along at least a portion of the wiper blade member length L. As shown in Fig. 1, the airfoil member 14 may extend the entire length L of the wiper blade member 12.

The airfoil member 14 has a cross-sectional profile (shown in detail in Figs. 2-4 and Figs. 6A-6D) that is symmetrical about a plane of symmetry S. It is to be understood that the plane of symmetry S extends through a center of the airfoil member 14 and longitudinally through the airfoil member 14, as shown in Fig. 1. It is to be understood that the symmetrical cross-sectional profile is designed to substantially prevent lift of the wiper blade assembly 10, while substantially reducing undesirable pullback when the assembly 10 is subjected to aerodynamic forces during vehicle operation. Generally, the wiper blade assembly 10 during use, at air speeds of about 50 m/s, may experience lift forces ranging from about 3 N/m to about 14 N/m, and drag forces ranging from about 11 N/m to about 22 N/m.

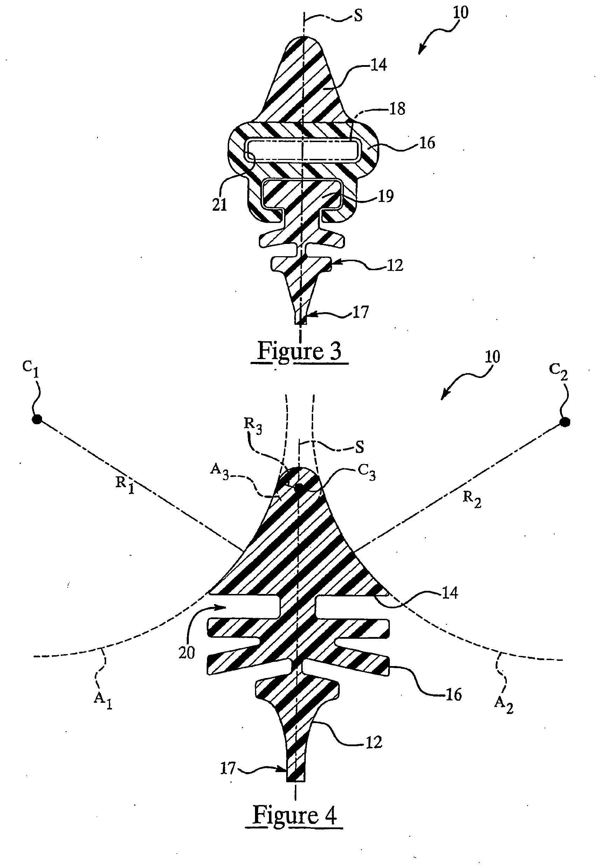

In an embodiment, the wiper blade assembly 10 includes a supporting member 16 positioned between the wiper blade member 12 and the airfoil member 14. It is to be understood that the supporting member 16 may add a desired degree of rigidity to the assembly 10. In one embodiment, supporting member 16 is spaced from the airfoil member 14, thereby defining one or more grooves 20 there between. Each groove 20 is adapted to engage a wiper blade spline 18 (an embodiment of which is shown in Fig. 2). In another embodiment, supporting member 16 has a channel 21 defined therein. The channel 21 is adapted to engage a wiper blade spline 18 (an embodiment of which is shown in Fig. 3).

The supporting member 16 may be formed integrally with the wiper blade member 12 and the airfoil member 14 (as shown in Figs. 1 and 2), or it may be a separate piece that bridges the two members 12, 14 (as shown in Fig. 3). Generally, the supporting member 16 may be formed of one or more polymeric materials (non-limitative examples of which include plastic materials, thermoplastic materials, elastomer materials (natural and/or synthetic), thermoplastic elastomer materials (TPE), silicone materials, and/or combinations thereof).

Fig. 1 also depicts a rotation axis R substantially perpendicular to the length L. It is to be understood that the symmetrical wiper blade assembly 10 may be rotated about 180° about the rotation axis R after the assembly is used (e.g. in conjunction with a vehicle wiper system) for predetermined time intervals. In a non-limitative example, after the assembly 10 is used for a time interval of about three-months (where one side 13 of the wiper blade member 12 in a non-operating position may be in contact with the windshield for prolonged periods of time), the user may rotate the assembly 10 about 180° about the rotation axis R such that the other side 15 of the wiper blade member 12 contacts the windshield in the non-operating position. By rotating the wiper assembly 10 in this manner, the present disclosure advantageously may avoid the occurrence of a "permanent set" condition. As defined herein, "permanent set" refers to a material (e.g. wiper blade member 12) that is deflected so far that its elastic properties have been exceeded and generally will not return to its original condition upon release of load. Without being bound to any theory, it is believed that this rotation of the wiper blade assembly 10 about 180° about the rotation axis R after predetermined time intervals may advantageously extend the useful life of the wiper blade assembly 10.

Referring now to Fig. 2, a cross-sectional view of the embodiment of the wiper blade assembly 10 shown in Fig. 1 is depicted. In this embodiment, the assembly 10 includes an integrally formed wiper blade member 12 having a wiping section 17, supporting member 16, and airfoil member 14.

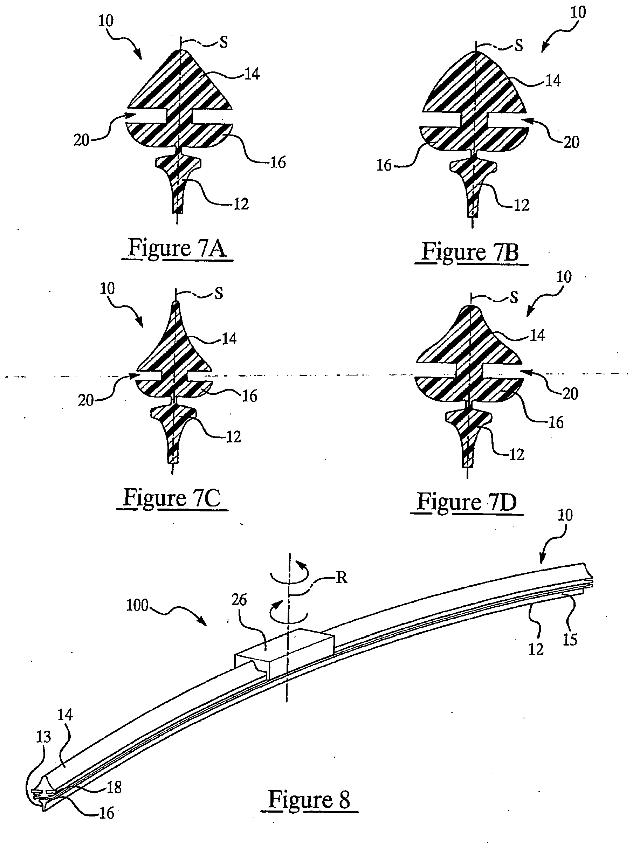

As shown, the assembly 10 is capable of slidingly engaging a wiper blade spline 18 (shown in phantom) in each of the two grooves 20 defined between the airfoil member 14 and the supporting member 16. It is to be understood that the wiper blade spline(s) 18 may also include end caps (not shown) that engage the opposed ends of the wiper blade assembly 10, aiding in preventing assembly 10 from undesirable disengagement from wiper blade spline(s) 18. In an embodiment, the wiper blade spline 18 may attach to a clip 26 (schematically shown in Fig. 8), which aids in attaching the wiper blade assembly 10 to the vehicle wiping system (not shown).

The embodiment of the airfoil member 14 shown in Fig. 2 has a symmetrical cross-sectional profile in the shape of a bell curve (described further herein in reference to Fig. 4).

In the embodiments disclosed herein, the airfoil member 14 has a height H and a width W. In an embodiment, the height H of the airfoil member 14 may range from about 4 mm to about 30 mm, and the width W may range from about 6 mm to about 40 mm. It is to be understood that the airfoil member 14 height H and width W may vary, depending, at least in part, on the application in which the wiper blade assembly 10 is being used. Further, the width W of the airfoil member 14 may be determined, at least in part, by the size of the wiper blade spline(s) 18 being used. For example, if a relatively wide wiper blade spline 18 is used, a relatively wide airfoil member 14 may be desirable.

Referring now to Fig. 3, an alternate embodiment of the wiper blade assembly 10 is depicted. The assembly 10 includes an airfoil member 14, a supporting member 16, and a wiper blade member 12 supported by the supporting member 16.

As shown, the assembly 10 is capable of slidingly engaging a wiper blade spline 18 (shown in phantom) in the channel 21 defined in the supporting member 16. It is to be understood that the channel 21 may extend through the supporting member 16 substantially the length L of the wiper blade assembly 10.

The embodiment of the supporting member 16 shown in Fig. 3 is also designed to engage (e.g. slidingly) an end portion 19 of the wiper blade member 12 which is distal to the wiping section 17. As such, the wiper blade member 12 in this embodiment is generally not formed integrally with the airfoil member 14. It is to be understood that end caps (not shown) may aid in preventing undesirable disengagement of the wiper blade spline 18 and/or the wiper blade member 12.

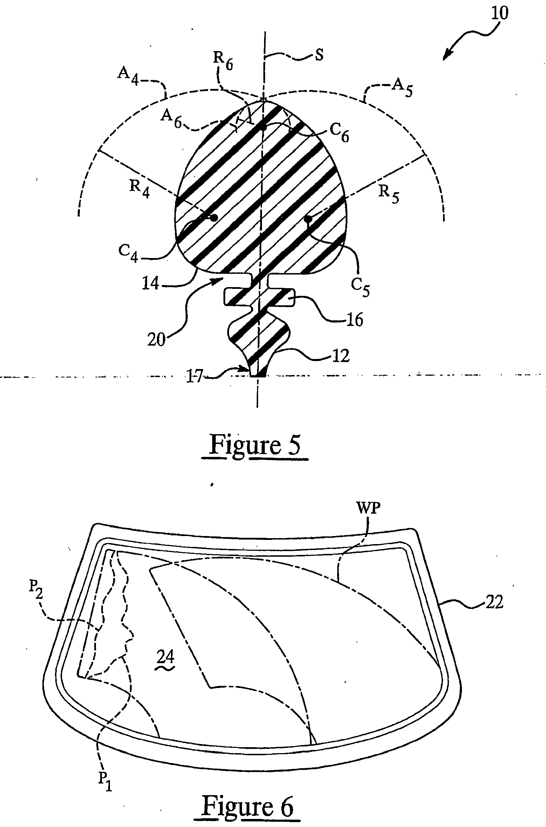

Figs. 4 and 5 depict, in detail, alternate embodiments of cross-sectional profiles of the airfoil member 14. Specifically, Fig. 4 depicts an airfoil member 14 having one variation of a bell curve shaped symmetrical cross-sectional profile, and Fig. 5 depicts an airfoil member 14 having a cardioid shaped symmetrical cross-sectional profile.

Referring now to Fig. 4, the airfoil member 14 having the bell curve shaped cross-sectional profile generally includes two sides and a top. In an embodiment, side circular arcs A-i, A₂, respectivly, define each of the sides of the bell curve shaped cross-sectional profile. Each of the side circular arcs Ai, A₂ has a respective center C₁, C₂, each of which is external to the cross-sectional profile. The radii R-i, R₂ of the respective side circular arcs A-i, A₂ may range from about 8 mm to about 16 mm.

In this embodiment, a top circular arc A₃ defines the top of the bell curve shaped cross-sectional profile of the airfoil member 14 depicted in Fig. 4. It is to be understood that the top circular arc A₃ has a center C₃ substantially on the plane of symmetry S and internal to the cross-sectional profile. The radius R₃ of the top circular arc A₃ may range from about 0.5 mm to about 6 mm.

Referring now to Fig. 5, the airfoil member 14 having a cardioid shaped cross-sectional profile generally includes two sides and a top. In an embodiment, a side circular arc A₄, A₅ respectively defines each of the sides of the cardioid shaped cross-sectional profile. Each of the side circular arcs A₄, A₅ has a respective center C₄, C₅, each of which is internal to the cross-sectional profile. The radii R₄, R₅ of the respective side circular arcs A₄, A₅ range from about 8 mm to about 16 mm.

In this embodiment, a top circular arc A₆ defines the top of the cardioid shaped cross-sectional profile of the airfoil member 14 depicted in Fig. 5. It is to be understood that the top circular arc A₆ has a center C₆ substantially on the plane of symmetry S and internal to the cross-sectional profile. The radius Re of the top circular arc A₆ may range from about 0.5 mm to about 6 mm.

Referring now to Fig. 6, a windshield 22 is depicted from the perspective of a passenger looking outside of the vehicle through the windshield 22. As such, area 24 represents the driver's side of the vehicle.

The windshield wipe pattern WP is a non-limitative example of the path that the wiper blade assembly 10 travels across the windshield 22. P₁ and P2 illustrate two different pullback patterns, which result from rewetting of the wiped surface on the trailing side of a wiper blade as the blade reverses direction during travel. P₁ is an example of the pullback resulting from use of a non-symmetrical airfoil wiper blade assembly. The pullback distance P₁ (measured from the point at which the blade reverses direction) generally ranges from about 3 cm to about 6 cm. P₂ illustrates the pullback resulting from use of an embodiment of the wiper blade assembly 10 disclosed herein (having a symmetrical airfoil member 14). The pullback distance P₂ (measured from the point at which the blade reverses direction) is generally less than about 3 cm. In a further embodiment, the pullback distance P₂ may range from about 0.5 cm to about 2.5 cm.

Referring now to Figs. 7A through 7D together, alternate embodiments of the wiper blade assembly 10 are depicted. Fig. 7A depicts an airfoil member 14 having a substantially triangular shaped cross-sectional profile with substantially straight sides. Each of the sides is substantially equidistant from the plane S of symmetry. In a non-limitative example, the assembly 10 depicted in Fig. 7A may experience a lift force during use at about 50 m/s (112 mph, 180 kph) of about 5.1 N/m and a drag force of about 19.7 N/m.

Fig. 7B depicts the airfoil member 14 having the cardioid shaped cross- sectional profile. In a non-limitative example, the assembly 10 depicted in Fig. 7B may experience a lift force during use at about 50 m/s (112 mph, 180 kph) of about 8.3 N/m and a drag force of about 17.5 N/m.

Figs. 7C and 7D each depict the airfoil member 14 having various forms of the bell curve shaped cross-sectional profile. In a non-limitative example, the assembly 10 depicted in Fig. 7C may experience a lift force during use at about 50 m/s (112 mph, 180 kph) of about 4.2 N/m and a drag force of about 20.3 N/m. In another non-limitative example, the assembly 10 depicted in Fig. 7D may experience a lift force during use at about 50 m/s (112 mph, 180 kph) of about 4.6 N/m and a drag force of about 20.7 N/m.

It is to be understood that the lift force(s) and drag force(s) experienced by the assembly 10 may vary, depending, at least in part, on the vehicle, the vehicle speed, windshield rake or window rake, and/or the like, and/or combinations thereof.

Referring now to Fig. 8, a system 100 includes an embodiment of the symmetrical wiper blade assembly 10 having wiper blade splines 18 engaged therewith, and a clip 26, (shown schematically) connected thereto. The clip 26 may be attached to the wiper blade assembly 10 via the wiper blade splines 18. The clip 26 may also attach the assembly 10 to a wiper arm (not shown) of a vehicle wiper system.

In an embodiment, the clip 26 and thus the system 100 are symmetrical. It is to be understood that the symmetrical system 100 (including the clip 26) may be rotated about 180° about the rotation axis R. A symmetrical system 100 may advantageously extend the useful life of the wiper blade assembly 10 (as previously described). Further, it is believed that the symmetrical system 100 may substantially eliminate potential assembly problems associated with correctly orienting the system 100 on the vehicle wiper system in which it is included. Still further, a symmetrical system 100 may advantageously be used on either a left-drive vehicle or a right-drive vehicle.

An embodiment of a method of forming an embodiment of a wiper blade assembly 10 as disclosed herein includes operatively connecting the airfoil member 14 to the wiper blade member 12. In an embodiment, the airfoil member 14, the supporting member 16, and/or the wiper blade member 12 may be integrally formed (see Fig. 2), such as, for example, by a dual extrusion process (where one or more materials are used). In a further non-limitative example embodiment, where the airfoil member 14 and the supporting member 16 are formed of the same material, an extrusion process may be used. Further, the wiper blade member 12 may be formed separately and engaged with the integrally formed (such as, for example, via dual extrusion) supporting member 16 and airfoil 14 (see Fig. 3).

It is to be understood that the wiper blade assembly 10 may be formed using any suitable extrusion process(es) (a non-limitative example of which is a dual extrusion process), co-molding process(es), bonding process(es) (a non- limitative example of which includes adhesive bonding), mechanical attachment process(es), and/or combinations thereof.

Embodiment(s) of the wiper blade assembly 10 and system 100 include, but are not limited to the following advantages. The assembly 10 may advantageously provide minimal pullback with relatively low aerodynamic blade lift at various vehicle speeds. Embodiments of the assembly 10 and system 100 may be rotatable, thereby extending the useful life of the wiper blade member 12. Further, a rotatable system 100 may aid in substantially eliminating potential assembly problems associated with correctly orienting the system 100 on the vehicle wiper system. Still further, the system 100 or assembly 10 may be used with a right-drive vehicle or a left-drive vehicle.

While several embodiments have been described in detail, it will be apparent to those skilled in the art that the disclosed embodiments may be modified. Therefore, the foregoing description is to be considered exemplary rather than limiting.

## Claims

1. A wiper blade assembly (10) comprising a wiper blade member (12) having a length, and only one airfoil member (14) operatively connected to the wiper blade member (12), the airfoil member (14) extending longitudinally along at least a portion of the wiper blade member length (L), the airfoil member (14) having a cross-sectional profile that is symmetrical about a plane of symmetry (S) extending through a center of the airfoil member (14) and longitudinally through the airfoil member (14), said wiper blade assembly (10) further comprising a supporting member (16) positioned between the airfoil member (14) and the wiper blade member (12), the supporting member (16) being spaced from the airfoil member (14), thereby defining at least one groove (20) therebetween, the at least one groove (20) adapted to slidingly engage a wiper blade spline (18), **characterized in that** the supporting member (16) is integral with each of the wiper blade member (12) and the airfoil member (14), and wherein the cross- sectional profile is substantially a bell curve shape having sides and a top, the sides substantially defined by a side circular arc (A₁, A₂) having a center (C₁, C₂) external to the cross-sectional profile and the top substantially defined by a top circular arc (A₃) having a center (C₃) substantially on the plane of symmetry (S) and internal to the cross-sectional profile.

2. The wiper blade assembly (10) as defined in claim 1 wherein the cross-sectional profile substantially prevents wiper blade assembly (10) lift while reducing pullback when the assembly is subjected to aerodynamic forces during vehicle operation.

3. The wiper blade assembly (10) as defined in claim 2 wherein the wiper blade assembly (10) experiences during use, at air speeds of about 50 m/s, a lift force ranging from about 3 N/m to about 14 N/m and a drag force ranging from about 11 N/m to about 22 N/m.

4. The wiper blade assembly (10) as defined in claim 2 wherein the pullback ranges from about 1 cm to about 3 cm.

5. The wiper blade assembly (10) as defined in claim 1 wherein the assembly is adapted to wipe a vehicle windshield (22).

6. The wiper blade assembly (10) as defined in claim 1 wherein the wiper blade assembly (10) is rotatable about 180° about a rotation axis (R) that is substantially perpendicular to the wiper blade member length (L).

7. A method for forming a wiper blade assembly (10), the method comprising operatively connecting only one airfoil member (14) to a wiper blade member (12) having a length, the airfoil member (14) extending longitudinally along at least a portion of the wiper blade member length (L), the airfoil member (14) having a cross- sectional profile that is symmetrical about a plane of symmetry (S) extending through a center of the airfoil member (14) and longitudinally through the airfoil member (14), further comprising establishing a supporting member (16) between the wiper blade member (12) and the airfoil member (14) and spaced from the airfoil member (14) so as to define at least one groove (20) therebetween, the at least one groove (20) adapted to slidingly engage a wiper blade spline (18), wherein the supporting member (16) is formed integrally with each of the wiper blade member (12) and the airfoil member (14), **characterized in that** the cross-sectional profile is substantially a bell curve shape having sides and a top, the sides substantially defined by a side circular arc (A₁, A₂) having a center (C₁, C₂) external to the cross-sectional profile and the top substantially defined by a top circular arc (A₃) having a center (C₃) substantially on the plane of symmetry (S) and internal to the cross-sectional profile.

8. The method as defined in claim 7 wherein the symmetrical cross-sectional profile substantially prevents wiper blade assembly (10) lift while reducing pullback when the assembly is subjected to aerodynamic forces during vehicle operation.

9. The method as defined in claim 8 wherein the wiper blade assembly (10) experiences during use, at air speeds of about 50 m/s, a lift force ranging from about 3 N/m to about 14 N/m and a drag force ranging from about 11 N/m to about 22 N/m.

10. The method as defined in claim 8 wherein the pullback ranges from about 1 cm to about 3cm.

11. The method as defined in claim 7 wherein the wiper blade assembly (10) is adapted to wipe a vehicle windshield.

12. The method as defined in claim 7 wherein the wiper blade assembly (10) is rotatable about 180° about a rotation axis (R) that is substantially perpendicular to the wiper blade member length (L).

13. The method as defined in claim 7 wherein operatively connecting is accomplished by at least one of extrusion processes, co-molding processes, bonding processes, mechanical attachment processes, and combinations thereof.

14. A method for extending a useful life of a symmetrical wiper blade assembly (10), the method comprising the step of forming a symmetrical wiper blade assembly (10) according to claim 7, wherein the wiper blade assembly is adapted to be used in a vehicle windshield wiper system for a predetermined time interval after which the wiper blade assembly (10) is adapted to be rotated about 180° about a rotation axis (R) that is substantially perpendicular to a length of the wiper blade assembly (10).

## Patentansprüche

1. Wischerblattanordnung (10) mit einem Wischerblattglied (12), das eine Länge aufweist, und nur einem Flügelprofilglied (14), das mit dem Wischerblattglied (12) wirkverbunden ist, wobei sich das Flügelprofilglied (14) in Längsrichtung entlang mindestens einem Abschnitt der Wischerblattgliedlänge (L) erstreckt, wobei das Flügelprofilglied (14) ein Querschnittsprofil aufweist, das um eine Symmetrieebene (S), welche sich durch eine Mitte des Flügelprofilglieds (14) und in Längsrichtung durch das Flügelprofilglied (14) erstreckt, symmetrisch ist, wobei die wischerblattanordnung (10) ferner ein Tragglied (16) aufweiset, das zwischen dem Flügelprofilglied (14) und dem Wischerblattglied (12) angeordnet ist, wobei, das Tragglied (16) von dem Flügelprofilglied (14) beabstandet ist' und dadurch mindestens eine Rille (20) dazwischen definiert, wobei die mindestens eine Rille (20) dazu ausgebildet ist, mit einer Wischerblattrippe (18) in Gleiteingriff zu stehen, **dadurch gekennzeichnet, dass** das Tragglied (16) mit jedem aus der Gruppe umfassend das Wischerblattglied (12) und das Flügelprofilglied (14) einstückig ausgebildet ist, und wobei das Querschnittsprofil im Wesentlichen eine Glockenkurvenform mit Seiten und einem oberen Ende ist, wobei die Seiten im Wesentlichen durch einen Seitenkreisbogen (A₁, A₂) mit einem Mittelpunkt (C₁, C₂) außerhalb des Querschnittsprofils definiert sind und das obere Ende im Wesentlichen durch einen oberen Kreisbogen (A₃) mit einem Mittelpunkt (C₃), der im Wesentlichen auf der Symmetrieebene (S) und innerhalb des Querschnittsprofils liegt, definiert ist.

2. Wischerblattanordnung (10) nach Anspruch 1, wobei das Querschnittsprofil Auftrieb der Wischerblattanordnung (10) im Wesentlichen verhindert und dabei ein Zurückziehen reduziert, wenn die Anordnung während des Fahrzeugbetriebs aerodynamischen Kräften ausgesetzt wird.

3. Wischerblattanordnung (10) nach Anspruch 2, wobei die wischerblattanordnung (10) während des Gebrauchs bei Luftgeschwindigkeiten von etwa 50 m/s eine Auftriebskraft im Bereich von etwa 3 N/m bis etwa 14 N/m und eine Widerstandskraft im Bereich von etwa 11 N/m bis etwa 22 N/m erfährt.

4. Wischerblattanordnung (10) nach Anspruch 2, wobei das Zurückziehen im Bereich von etwa 1 cm bis etwa 3 cm liegt,

5. Wischerblattanordnung (10) nach Anspruch 1, wobei die Anordnung dazu ausgebildet ist, eine Fahrzeugwindschutzscheibe (22) zu wischen.

6. Wischerblattanordnung (10) nach Anspruch 1, wobei die Wischerblattanordnung (10.) um etwa 180° um eine Drehachse (R) drehbar ist, welche zu der Wischerblattgliedlänge (L) im Wesentlichen im rechten Winkel verläuft.

7. Verfahren zum Herstellen einer Wischerblattanordnung (10), wobei das Verfahren umfasst: Wirkverbinden nur eines Flügelprofilglieds (14) mit einem Wischerblattglied (12), das eine Länge aufweist, wobei sich das Flügelprofilglied (14) in Längsrichtung entlang mindestens einem Abschnitt der Wischerblattgliedlänge (L) erstreckt, wobei das Flügelprofilglied (14) ein Querschnittsprofil aufweist, das um eine Symmetrieebene (S), welche sich durch eine Mitte des Flügelprofilglieds (14) und in Längsrichtung durch das Flügelprofilglied (14) erstreckt, symmetrisch ist, ferner umfassend das Vorsehen eines Tragglieds (16) zwischen dem Wischerblattglied (12) und dem Flügelprofilglied (14) und von dem Flügelprofilglied (14) beabstandet, um mindestens eine Rille (20) dazwischen zu definieren, wobei die mindestens eine Rille (20) dazu ausgebildet ist, mit einer Wischerblattrippe (18) in Gleiteingriff zu stehen, wobei das Tragglied (16) einstückig mit jedem aus der Gruppe umfassend das Wischerblattglied (12) und das Flügelprofilglied (14) ausgebildet ist, **dadurch gekennzeichnet, dass** das Querschnittsprofil im Wesentlichen eine Glockenkurvenform mit Seitein und einem oberen Ende ist, wobei die Seitein im Wesentlichen durch einen Seitenkreisbogen (A₁, A₂) mit einem Mittelpunkt (C₁, C₂) außerhalb des Querschnittsprofils definiert sind und das obere Ende im Wesentlichen' durch einen oberen Kreisbogen (A₃) mit einem Mittelpunkt (C₃), der im Wesentlichen auf der Symmetrieebene (S) und innerhalb des Querschnittsprofils liegt, definiert ist.

8. Verfahren nach Anspruch 7, wobei das symmetrische Querschnittsprofil im Wesentlichen Auftrieb der Wischerblattanordnung (10) verhindert und dabei ein Zurückziehen reduziert, wenn die Anordnung während des Fahrzeugbetriebs aerodynamischen Kräften ausgesetzt wird.

9. Verfahren nach Anspruch 8, wobei die Wischerblattanordnung (10) während des Gebrauchs bei Luftgeschwindigkeiten von etwa 50 m/s eine Auftriebskraft im Bereich von etwa 3 N/m bis etwa 14 N/m und eine Widerstandskraft im Bereich von etwa 11 N/m bis etwa 22 N/m erfährt.

10. Verfahren nach Anspruch 8, wobei das Zurückziehen im Bereich von etwa 1 cm bis etwa 3 cm liegt.

11. Verfahren nach Anspruch 7, wobei die Wischerblattanordnung (10) dazu ausgebildet ist, eine Fahrzeugwindschutzscheibe zu wischen.

12. Verfahren nach Anspruch 7, wobei die Wischerblattanordnung (10) um etwa 180° um eine Drehachse (R) drehbar ist, welche zu der Wischerblattgliedlänge (L) im Wesentlichen im rechten Winkel verläuft.

13. Verfahren nach Anspruch 7, wobei das Wirkverbinden durch mindestens einen aus der Gruppe umfassend Extrusionsprozesse, Zusammenformprozesse, Bondingprozesse, mechanische Befestigungsprozesse und Kombinationen daraus bewerkstelligt wird.

14. Verfahren zum Verlängern der nutzbaren Lebensdauer einer symmetrischen Wischerblattanordnung (10), wobei das Verfahren den Schritt des Formens einer symmetrischen Wischerblattanordnung (10) nach Anspruch 7 umfasst, wobei die Wischerblattanordnung dazu ausgebildet ist, in einem Fahrzeug-Windschutzscheibenwischersystem einen vorgegebenen Zeitraum lang verwendet zu werden, woraufhin die Wischerblattanordnung (10) dazu ausgebildet ist, um etwa 180° um eine Drehachse (R) gedreht zu werden, welche im wesentlichen im rechten Winkel zu einer Länge der Wischerblattanordnung (10) verläuft.

## Revendications

1. Ensemble de balai d'essuie-glace (10) comprenant une lame racleuse (12) ayant une longueur, et seulement un arcane déflecteur (14) relié fonctionnellement à la lame racleuse (12), l'organe déflecteur (14) s'étendant longitudinalement le long d'au moins une portion de la longueur (L) de la lame racleuse, l'organe déflecteur (14) ayant un profil de section transversale qui est symétrique par rapport à un plan de symétrie (S) passant par un centre de l'organe déflecteur (14) et s'étendant longitudinalement à travers l'organe déflecteur (14), ledit ensemble de balai d'essuie-glace (10) comprenant en outre un organe de support (16) positionné entre l'organe déflecteur (14) et la lame racleuse (12), l'organe de support (16) étant espacé de l'organe déflecteur (14), définissant ainsi au moins une rainure (20) entre eux, l'au moins une rainure (20) étant conçue pour s'engager de manière coulissante avec une vertèbre de balai d'essuie-glace (18), **caractérisé en ce que** l'organe de support (16) est formé d'un seul tenant avec chacun parmi la lame racleuse (12) et l'organe déflecteur (14), et le profil de section transversale étant sensiblement une forme de courbe en cloche ayant des côtés et une partie supérieure, les côtés étant définis sensiblement par un arc circulaire latéral (A₁, A₂) ayant un centre (C₁, C₂) externe au profil de section transversale et la partie supérieure étant définie sensiblement par un arc circulaire supérieur (A₃) ayant un centre (C₃) sensiblement sur le plan de symétrie (S) et interne au profil de section transversale.

2. Ensemble de balai d'essuie-glace (10) selon la revendication 1, dans lequel le profil de section transversale empêche sensiblement l'ensemble de balai d'essuie-glace (10) de se soulever tout en réduisant le «pullback» lorsque l'ensemble est soumis à des forces aérodynamiques pendant le fonctionnement du véhicule.

3. Ensemble de balai d'essuie-glace (10) selon la revendication 2, l'ensemble de balai d'essuie-glace (10) étant soumis, lors de l'utilisation, à des vitesses d'air d'environ 50 m/s, à une force de portance comprise entre environ 3 N/m et environ 14 N/m et à une force de traînée comprise entre environ 11 N/m et environ 22 N/m.

4. Ensemble de balai d'essuie-glace (10) selon la revendication 2, dans lequel le «pullback» est compris entre environ 1 cm et environ 3 cm.

5. Ensemble de balai d'essuie-glace (10) selon la revendication 1, l'ensemble étant conçu pour essuyer un pare-brise (22) de véhicule.

6. Ensemble de balai d'essuie-glace (10) selon la revendication 1, l'ensemble de balai d'essuie-glace (10) pouvant être tourné d'environ 180° autour d' un axe de rotation (R) qui est sensiblement perpendiculaire à la longueur (L) de la lame racleuse.

7. Procédé de formation d'un ensemble de balai d'essuie-glace (10), le procédé comprenant la liaison fonctionnelle de seulement un organe déflecteur (14) à une lame racleuse (12) ayant une longueur, l'organe déflecteur (14) s'étendant longitudinalement le long d'au moins une portion de la longueur (L) de la lame racleuse, l'organe déflecteur (14) ayant un profil de section transversale qui est symétrique par rapport à un plan de symétrie (S) passant par un centre de l'organe déflecteur (14) et s'étendant longitudinalement à travers l'organe déflecteur (14), comprenant en outre la réalisation d'un organe de support (16) entre la lame racleuse (12) et l'organe déflecteur (14), et espacé de l'organe déflecteur (14), de manière à définir au moins une rainure (20) entre eux, l'au moins une rainure (20) étant conçue pour s'engager de manière coulissante avec une vertèbre de balai d'essuie-glace (18), l'organe de support (16) étant formé d'un seul tenant avec chacun parmi la lame racleuse (12) et l'organe déflecteur (14), **caractérisé en ce que** le profil de section transversale est sensiblement une forme de courbe en cloche ayant des côtés et une partie supérieure, les côtés étant définis sensiblement par un arc circulaire latéral (A₁, A₂) ayant un centre (C₁, C₂) externe au profil de section transversale et la partie supérieure étant définie sensiblement par un arc circulaire supérieur (A₃) ayant un centre (C₃) sensiblement sur le plan de symétrie (S) et interne au profil de section transversale.

8. Procédé selon la revendication 7, dans lequel le profil de section transversale symétrique empêche sensiblement l'ensemble de balai d'essuie-glace (10) de se soulever tout en réduisant le «pullback» lorsque l'ensemble est soumis à des forces aérodynamiques pendant le fonctionnement du véhicule.

9. Procédé selon la revendication 8, l'ensemble de balai d'essuie-glace (10) étant soumis, lors de l_{'}utilisation, à des vitesses d'air d'environ 50 m/s, à une force de portance comprise entre environ 3 N/m et environ 14 N/m et à une force de traînée comprise entre environ 11 N/m et environ 22 N/m.

10. Procédé selon la revendication 8, dans lequel le « pullback» est compris entre environ 1 cm et environ 3 cm.

11. Procédé selon la revendication 7, l'ensemble de balais d'essuie-glace (10) étant conçu pour essuyer un pare-brise de véhicule.

12. Procédé selon la revendication 7, l'ensemble de balai d'essuie-glace (10) prouvant être tourné d'environ 180° autour d'un axe de rotation (R) qui est sensiblement perpendiculaire à la longueur (L) de la lame racleuse.

13. Procédé selon la revendication 7, dans lequel la liaison fonctionnelle est réalisée par au moins l'un parmi des procédés d'extrusion, des procédés de co-moulage, des procédés de collage, des procédés de fixation mécanique et des combinaisons de ceux-ci.

14. Procédé pour prolonger une durée de vie utile d'un ensemble de balai d'essuie-glace asymétrique (10), le procédé comprenant l'étape de formation d'un ensemble de balai d'essuie-glace symétrique (10) selon la revendication 7, l'ensemble de balai d'essuie-glace étant conçu pour être utilisé dans un système d'essuie-glace de pare-brise de véhicule pendant un intervalle de temps prédéfini après lequel l'ensemble de balai d'essuie-glace (10) est conçu pour être tourné d'environ 180° autour d'un axe de rotation (R) qui est sensiblement perpendiculaire à une longueur de l'ensemble de balai d'essuie-glace (10).
